# EUROPÄISCHE PATENTSCHRIFT

(11) **EP 1 868 838 B1**
(45) Veröffentlichungstag und Bekanntmachung des Hinweises auf die Patenterteilung: **02.06.2010**
(21) Anmeldenummer: 06724219.8
(22) Anmeldetag: 11.04.2006
(51) Int. Cl.: B60L 11/18

(54) **FLURFÖRDERFAHRZEUG**
INDUSTRIAL TRUCK
CHARIOT ELEVATEUR

(30) Priorität: 15.04.2005 DE 102005017734
(43) Veröffentlichungstag der Anmeldung: 26.12.2007
(73) Patentinhaber: ZF Friedrichshafen AG, 88038 Friedrichshafen (DE)
(72) Erfinder: BALD, Dirk, 99867 Gotha (DE); HABEL, Matthias, 99867 Gotha (DE); STREIPARDT, Peter, 99880 Waltershausen (DE); GRUHLE, Wolf-Dieter, 88069 Tettnang (DE); SCHWARZ, Josef, 88045 Friedrichshafen (DE); REMMLINGER, Hubert, 88046 Friedrichshafen (DE); FEULNER, Peter, 88048 Friedrichshafen (DE)
(86) Internationale Anmeldenummer: PCT/EP2006/003290
(87) Internationale Veröffentlichungsnummer: WO 2006/108604

(56) Entgegenhaltungen:
- EP-A- 1 384 641
- DE-A1- 3 306 467
- DE-A1- 3 718 471
- DE-A1- 10 244 769
- DE-A1- 19 649 506
- JP-A- 2004 166 441
- US-A1- 2002 189 336
- US-A1- 2004 027 087

## Beschreibung

Die Erfindung bezieht sich auf ein Flurförderfahrzeug mit mindestens zwei elektrischen Antrieben entsprechend dem Oberbegriff des Anspruchs 1.

Die DE 102004006722.8 der Anmelderin offenbart einen Antrieb für ein Flurförderfahrzeug, bei welchem ein Antriebsmotor mit einem Lenkmotor koaxial angeordnet ist und die Motoren vertikal im Fahrzeug angeordnet sind.

Weiterhin zeigt die DE 103 28 651 A1 ein Flurförderfahrzeug mit einem Antriebs- und einem Lenkmotor, welche ebenfalls koaxial zueinander angeordnet sind.

Solche Flurförderfahrzeuge besitzen also mindestens zwei elektrische Antriebe und üblicher Weise eine elektronische Steuerung für die elektrischen Antriebe. Die elektronische Steuerung setzt sich dabei zumindest aus jeweils einer Steuer- oder Signalelektronik und einer Leistungselektronik für die elektrischen Antriebe zusammen.

In DE 3306467 A1 wird ein Flurförderfahrzeug vorgeschlagen, welches zumindest einen Energiespeicher, eine übergeordnete Steuerung wie beispielsweise eine Fahrzeugsteuerung, zwei elektrische Antriebe, ein lenkbares Antriebsrad sowie eine elektronische Steuerung für die elektrischen Antriebe besitzt. Die elektronische Steuerung setzt sich aus mindestens einer Signal- und einer Leistungselektronik zusammen. Dabei generieren Signalelektroniken üblicher Weise die Steuer- und Regelsignale welche für die Funktionssteuerung der die elektrischen Antriebe notwendig sind. Die Leistungselektroniken sind dafür zuständig, dass die von der Energiequelle bereitgestellte Energie den elektrischen Antrieben bedarfsgerecht zugeführt wird. Die übergeordnete Steuerung ist nur über eine einzige Schnittstelle mit der elektronischen Steuerung verbunden. Es existiert sozusagen nur noch eine integrierte elektronische Steuerung für die mindestens zwei elektrischen Antriebe, welche über eine einzige Schnittstelle von der übergeordneten Steuerung angesprochen wird.

Außerdem sind die Signalelektroniken der mindestens zwei elektrischen Antriebe als eine räumlich (also konstruktiv) und funktional zusammengefasste Einheit ausgebildet. Eine solche zusammengefasste Einheit wird beispielsweise durch die Montage von mindestens zwei Signalelektroniken auf einer einzigen Platine dargestellt. Weiterhin kann auch eine einzige Signalelektronik verwendet werden, welche so leistungsfähig ist, dass sie die Steuer- und Regelsignale der mindestens zwei Antriebe generiert.

Der vorliegenden Erfindung liegt die Aufgabe zugrunde, ein Flurförderfahrzeug mit mindestens zwei elektrischen Antrieben zu schaffen, welches eine exakte Bestimmung des Reifen verschleiß ermöglicht.

Diese Aufgabe wird mit einem Flurförderfahrzeug entsprechend den kennzeichnenden Merkmalen des Hauptanspruchs gelöst.

Erfindungsgemäß wird ein erster Sensor so radial außerhalb des Antriebsrades angebracht, dass damit der radiale Abstand zum Antriebsrad messbar ist. In einer weiteren Ausgestaltung wird ein zweiter Sensor an der Unterseite des Fahrzeugbodens angebracht, mit welchem ein Abstand zum Boden sowie die Fahrzeuggeschwindigkeit über dem Grund messbar sind.

Erfindungsgemäß wird vorgeschlagen, einen Abstandssensor radial außerhalb eines Antriebsrades am Fahrzeug anzubringen. Dieser Abstandssensor sendet ein Abstandssignal an die erfindungsgemäße elektronische Steuerung woraus die elektronische Steuerung den aktuellen Raddurchmesser bestimmt. Wird dabei ein Radverschleiß erkannt, der über einem bestimmten Grenzwert liegt, wird von der elektronischen Steuerung ein Wartungssignal oder ein Wartungswert ausgegeben. Damit kann eine Zeit- oder Streckenabhängige Wartung, die manchmal zu früh und manchmal zu spät durchgeführt wird, vermieden werden. Mit einem solchen Sensor wird in einer weiteren Ausgestaltung auch ein berechnetes Geschwindigkeitssignal korrigiert. Die Berechnung der Fahrzeuggeschwindigkeit wird üblicherweise über das Produkt aus Drehzahl und Umfang berechnet. Wird durch einen Radverschleiß der Umfang verändert, muss die Geschwindigkeitsberechnung angepasst werden. Durch die Berücksichtigung des Radverschleißes durch einen angepassten Geschwindigkeitswert können somit Fehler, welche auf der Verwendung eines fehlerhaften Raddurchmessers entstehen, vermieden werden. Beispielsweise ist es bei autonomen Fahrfunktionen wichtig, stets die richtige Geschwindigkeit zu bestimmen.

Erfindungsgemäß wird außerden ein Sensor an der Fahrzeugunterseite, in Querrichtung außerhalb der Fahrzeugmitte angebracht. Der dort angebrachte Sensor misst den aktuellen Abstand zum Boden sowie die aktuelle Geschwindigkeit über Grund. Mit Hilfe eines solchen Sensors ist eine weitere Funktion möglich. Aus kurzfristigen Ausschlägen des Abstandssignals wird in der elektronischen Steuerung eine Fahrzeugneigung erkannt. Daraufhin werden vorteilhafter Weise Stabilisierungsfunktionen aktiviert um die Sicherheit des Fahrzeugs zu erhöhen. Werden langfristige Ausschläge des Abstandssignals gemessen, wird ein Radverschleiß erkannt und es wird von der elektronischen Steuerung ein Wartungssignal erzeugt. Weiterhin ist aus dem Vergleich der Geschwindigkeit über Grund und der Radgeschwindigkeit die Bestimmung des Radschlupfes möglich. Daraufhin wird in einer vorteilhaften Ausgestaltung eine Begrenzung des Antriebsmomentes eingeleitet um den Schlupf und auch den Verschleiß des Antriebsrades zu begrenzen.

In einer weiteren Ausgestaltung wird von der elektronischen Steuerung, bei Erkennen eines Spannungsausfalls der Fahrmotor als Generator angesteuert. Bei einer Bewegung des Fahrzeugs wird somit Energie erzeugt, welche dann an den elektrischen Lenkantrieb geleitet wird. Durch dieses Verfahren wird in einer Notsituation, in der keine elektrische Energie vorhanden ist ein Lenken des Fahrzeugs trotzdem ermöglicht.

Weiterhin wird vorgeschlagen, bei einer Anforderung nach einer Notbremsung und gleichzeitig erkannter Steigung der Fahrbahn ein Antriebsrad um ca. 90° zu verdrehen um damit eine Nothaltefunktion zu ermöglichen.

In einer weiteren Ausgestaltung werden Teile der Signalelektroniken in die Leistungselektroniken der mindestens zwei Antriebe integriert. Die Leistungselektroniken besitzen also einfache Steuereinheiten wie z.B. µ-Controller, welche kleine Rechenoperationen durchführen können. Dabei gibt die räumlich und funktional zusammengefasste Signalelektronik nur noch eingeschränkte Vorgaben an die Leistungselektroniken, in welchen dann Teile der Steuer- und Regelsignale für die Leistungselektroniken generiert werden. Das kann beispielsweise ein pulsweitenmoduliertes Signal sein, über welches ein Wert von 0 bis 100% des maximalen Antriebmoments gefordert wird. Wie diese Vorgaben dann von der Leistungselektronik verarbeitet werden, regelt und steuert der Teil der Signalelektronik, welcher in der Leistungselektronik integriert ist.

In einer weiteren Ausgestaltung wird die komplette Signaletektronik in die Leistungselektroniken integriert. Über die einzige Schnittstelle der elektronischen Steuerung werden die Daten direkt an die Bereiche der Leistungselektronik gesandt, in welchen die Signalelektroniken integriert sind. Somit werden alle Steuer- und Regelsignale direkt in den Leistungselektroniken generiert. Die Daten werden dabei vorteilhafter Weise als Bus-Daten, wie z.B. CAN-Bus Daten versendet. Dass bedeutet natürlich, dass die Leistungselektroniken mindestens eine Bus-Schnittstelle besitzen. So können von der übergeordneten Fahrzeugsteuerung z.B. direkt Drehzahl-, Drehrichtungs- oder Momentenvorgaben an die Leistungselektroniken gesendet werden. Die verschiedenen Leistungselektroniken, in welchen die Signalelektroniken integriert sind, können über die Bus-Schnittstellen auch untereinander kommunizieren, sind also über den Bus miteinander vernetzt. Bei einer solchen Ausgestaltung kann beispielsweise die übergeordnete Fahrzeugsteuerung einen bestimmten Lenkwinkel anfordern. Diese Anforderung wird über die einzige Schnittstelle an die elektronische Steuerung weitergeleitet. In der elektronischen Steuerung wird diese Anforderung an alle Leistungselektroniken geleitet, wobei die Leistungselektronik des Lenkantriebes erkennt, dass die Anforderung nur für sie gilt. Die anderen Leistungselektroniken wiederum erkennen, dass die Anforderung für sie nicht gelten. Durch die Vernetzung können auch Abhängigkeiten zwischen den verschiedenen Antrieben berücksichtigt werden.

Zur weiteren Verdeutlichung der Erfindung sowie dessen Ausführungsformen ist der Beschreibung eine Zeichnung beigefügt.

In dieser zeigt::
- Fig. 1.: Aufbau einer Steuerung nach dem Stand der Technik;
- Fig. 2: Aufbau einer erfindungsgemäßen Steuerung;
- Fig. 3: Prinzipbild der erfindungemäßen Funktionsstruktur;
- Fig. 4: Anordnung eines Abstandsensors und
- Fig. 5: Anordnung eines Abstand- und Geschwindigkeitssensors.

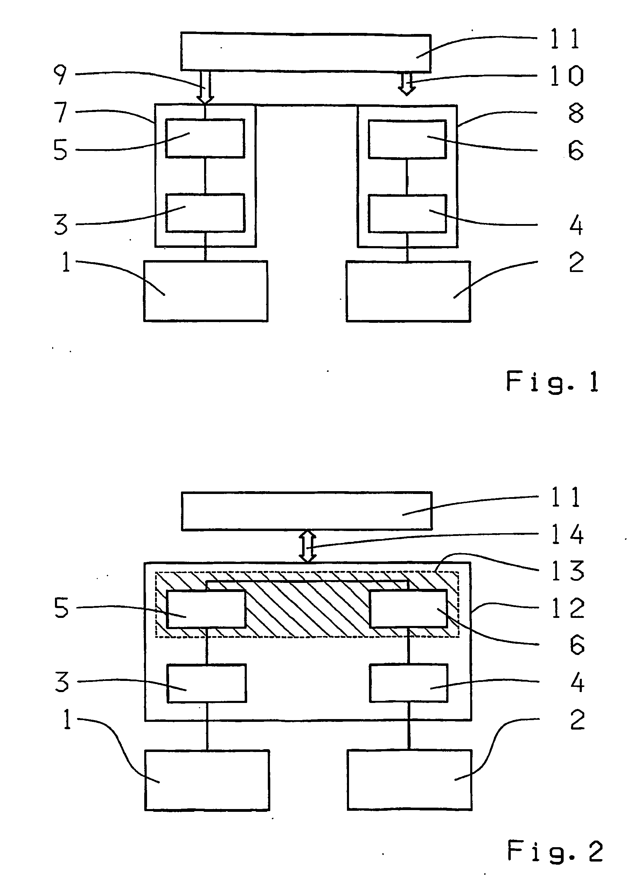

Fig.1 beschreibt den Aufbau einer Steuerung für ein Flurförderfahrzeug nach dem Stand der Technik. Dort werden zwei elektrische Antriebe 1, 2 gezeigt, ein Fahrmotor 1 sowie ein Lenkmotor 2. Jeder der beiden Antriebsmotoren 1, 2 besitzt eine separate Leistungselektronik 3, 4 und eine separate Signalelektronik 5, 6, welche die separaten elektronischen Steuerungen 7, 8 bilden. An diese separaten elektronischen Steuerungen 7, 8 werden Signale von einer übergeordneten Steuerung 11, jeweils über eine separate Schnittstelle 9, 10, gesendet. Bei einem solchen Aufbau, bei dem jeder Antriebsmotor 1, 2 eine eigene Schnittstelle 9, 10 benötigt, ist bei unterschiedlichen Fahrzeugen ein hoher Abstimmaufwand für den Fahrzeughersteller notwendig, da für jeden Antriebsmotor 1, 2 eine separate Abstimmung durchgeführt werden muss.

Fig. 2 beschreibt den grundsätzlichen Aufbau einer erfindungsgemäßen elektronischen Steuerung 12. Dort werden zwei Antriebsmotoren 1,2 gezeigt, ein Fahrantrieb 1 und ein Lenkantrieb 2. Die elektronische Steuerung 12 für die beiden Antriebsmotoren 1, 2 setzt sich dabei aus zwei Signalelektroniken 5, 6 und zwei Leistungselektroniken 3, 4 zusammen, wobei die beiden Signalelektroniken 5, 6 räumlich und funktional in eine Einheit 13 zusammengefasst sind. Dafür können beispielsweise die mindestens zwei Signalelektroniken auf nur eine Platine montiert werden, oder es wird nur eine einzige, leistungsfähige Signalelektronik verwendet, welche die Steuer- und Regelsignale für die mindestens zwei Antriebe generiert.

In der elektronischen Steuerung 12 werden unterlagerte Stellgrößen bestimmt, welche an die Antriebsmotoren 1, 2 weitergeleitet werden. Die elektronische Steuerung 12 wird nur über eine einzige einheitliche Schnittstelle 14 mittels übergeordneter Stellbefehle angesprochen. Die erfindungsgemäße Steuerung 12 wird auch integrierte Steuerung genannt. Durch den integrierten Aufbau liegen in der Steuerung 12 unterschiedlichen Daten mehrerer Aggregate 1, 2 vor. Dadurch wird die zeitliche und inhaltliche Koordination der unterlagerten Stellgrößen mit geringem Aufwand ermöglicht. Die einzige Schnittstelle 14 wird erfindungsgemäß auch für unterschiedliche Fahrzeuge einheitlich aufgebaut. Dadurch sinkt der Abstimmaufwand bei der Verwendung in unterschiedlichen Fahrzeugen erheblich. Derselbe erfindungsgemäße Aufbau der elektronischen Steuerung 12 ist natürlich auch bei mehr als zwei Antriebsmotoren möglich.

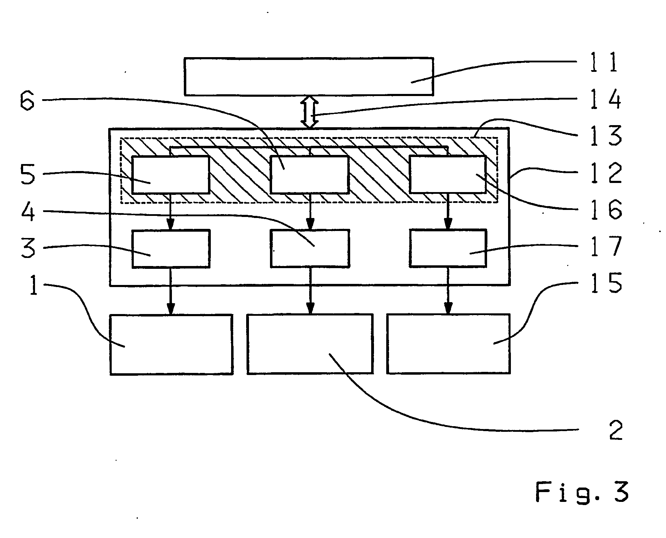

Fig. 3 zeigt die grundlegende Funktionsstruktur der integrierten elektronischen Steuerung 12. Durch eine übergeordnete Strategie, wie beispielsweise eine übergeordnete Fahrzeugsteuerung 11, werden übergeordnete Stellbefehle an die integrierte elektronische Steuerung 12 geleitet. Von der elektronischen Steuerung 12 werden dann untergeordnete Stellgrößen an die drei Antriebsmotoren 1, 2, 15, welche hier von einem Fahrmotor 1, einem Lenkmotor 2 sowie einer elektrischen Bremse 15 dargestellt werden, weitergeleitet.

Als übergeordnete Stellbefehle werden beispielsweise ein Antriebsmoment, Bremsmoment, Antriebsdrehzahl, Lenkwinkel, ein Signal für das Ein- oder Ausschalten einer Notbremsung, oder eine Frequenz für eine elektrische Bremse 15 vorgegeben. Ein Frequenzsignal wird vorteilhafter Weise als gechoppertes Signal vorgegeben. Die einzige Schnittstelle 14 entspricht vorteilhafter Weise einem Bussystem, beispielsweise einem CAN-Bus.

Die elektronische Steuerung 12 besteht aus drei Signalelektroniken 5, 6, 16, welche für die Steuerung und/oder Regelung der drei Antriebsmotoren 1, 2, 15 zuständig sind. Diese drei Signalelektroniken 5, 6, 16 werden erfindungsgemäß räumlich und funktional in einer Einheit 13 zusammengefasst. Auch diese drei Signalelektroniken können beispielsweise auf einer Platine montiert oder es wird nur eine einzige Signalelektronik verwendet, welche die Steuer- und Regelsignale für die mindestens zwei Antriebe generiert. In einer Ausgestaltung sind die drei Signalelektroniken 5, 6, 16 weiterhin in einem eignen Gehäuse zusammengefasst und werden über ein einheitliches Bussystem angesprochen. Die Steuer- und Regelsignale der zusammengefassten Signalelektroniken 5, 6, 16 werden dann an die jeweiligen Leistungselektroniken3, 4, 17 für die elektrischen Antriebe 1, 2, 15 weitergeleitet. Durch die Leistungselektroniken 4, 5, 17 werden dann die unterlagerten Stellgrößen, wie beispielsweise eine Spannung oder eine Frequenz für die elektrischen Antriebe 1, 2, 15 vorgegeben. Durch den erfindungsgemäßen Aufbau der integrierten elektronischen Steuerung 12 liegen die Daten der Antriebsmotoren 1, 2, 15 in nur einer Steuerung 12 vor. Die vorliegenden Daten können also ohne großen Aufwand kombiniert und einheitlich aufgezeichnet werden. So sind aus den vorliegenden Daten Belastungs-, Kosten-, Geschwindigkeits-, Wartungs- und Verschleißwerte berechenbar, welche dann über die einzige Schnittstelle 14 an die übergeordnete Fahrzeugsteuerung 11 weiterleitbar sind.

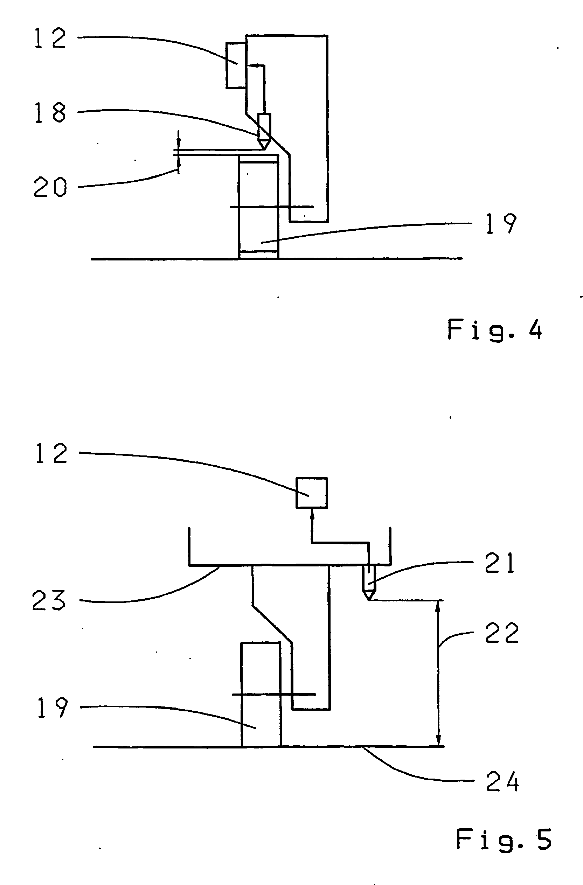

Fig. 4 zeigt einen Aufbau mit einem zusätzlichen erfindungsgemäßen Sensor 18, durch welchen der Abstand 20 zu einem Antriebsrad 19 messbar ist. Erfindungsgemäß wird das Abstandssignal an die elektronische Steuerung 12 geleitet. In der elektronischen Steuerung 12 wird damit der aktuelle Raddurchmesser bestimmt. Sinkt der Raddurchmesser unter einen bestimmten Grenzwert, so wird von der elektronischen Steuerung 12 ein Wartungssignal ausgegeben, welches auf eine notwendige Wartung hinweist. Dieses Wartungssignal ist an eine übergeordnete Steuerung 11 weiterleitbar. Durch die Berücksichtigung des aktuellen Raddurchmessers von der elektronischen Steuerung 12 wird ein Wartungssignal berechnet, dass nicht von der gefahrenen Zeit oder Strecke, sondern nur vom tatsächlichen Zustand des Antriebsrades 19 abhängt. Somit wird verhindert, dass zu früh oder zu spät das Antriebsrad 19 kontrolliert und/oder gewechselt wird.

Durch einen Aufbau gemäß Fig. 4 kann in der elektronischen Steuerung 12 auch ein Geschwindigkeitssignal korrigiert werden. Üblicher Weise wird ein solches Signal in der Steuerung aus der Drehzahl multipliziert mit dem Umfang berechnet. Wird hier ein immer der Umfang eines unbenutzten Antriebsrades 19 verwendet, weicht die tatsächliche Geschwindigkeit von der gemessenen ab, sobald sich der Radius des Antriebsrades 19 durch Verschleiß verringert.

Fig. 5 zeigt einen erfindungsgemäßen Aufbau mit einem zweiten Sensor 21, welcher auf einer Fahrzeugunterseite 23 angebracht ist. Der zweite erfindungsgemäße Sensor 21 befindet sich in Querrichtung außerhalb der Fahrzeugmitte. Der zweite Sensor 21 misst den Abstand 22 zum Untergrund 24 sowie die Fahrgeschwindigkeit über Grund. Diese Signale werden an die elektronische Steuerung 12 geleitet. Wird von der elektronischen Steuerung 12 eine kurzfristige Änderung des Abstandes 22 zum Untergrund 24 erkannt, so wird eine entsprechende Neigung des Fahrzeuges berechnet. Entsprechend der Fahrzeugneigung wird dann ein Stabilisierungsprogramm aktiviert. Wird eine langfristige Änderung des Abstandes 22 zum Untergrund 24 erkannt, so berechnet die elektronische Steuerung 12 einen Verschleiß des Antriebsrades 19 und erstellt ein Wartungssignal. Durch einen Vergleich der gemessenen Fahrgeschwindigkeit mit der berechneten Radgeschwindigkeit wird zudem ein Radschlupf erkannt. Wenn ein Radschlupf erkannt wird, begrenzt die elektronische Steuerung 12 das Antriebsmoment. Dadurch wird der Schlupf und der Radverschleiß reduziert.

### Bezugszeichen

- 1: elektrischer Antrieb
- 2: elektrischer Antrieb
- 3: Leistungselektronik
- 4: Leistungselektronik
- 5: Signalelektronik
- 6: Signalelektronik
- 7: Steuerung
- 8: Steuerung
- 9: Schnittstelle
- 10: Schnittstelle
- 11: übergeordnete Steuerung
- 12: integrierte elektronische Steuerung
- 13: zusammengefasste Einheit
- 14: Schnittstelle
- 15: elektrischer Antrieb
- 16: Signalelektronik
- 17: Leistungselektronik
- 18: Abstandssensor
- 19: Antriebsrad
- 20: Abstand
- 21: zweiter Sensor
- 22: Abstand
- 23: Fahrzeugunterseite
- 24: Untergrund

## Patentansprüche

1. Flurförderfahrzeug mit einem Energiespeicher, einer übergeordneten Steuerung (11), mindestens zwei elektrischen Antrieben (1, 2, 15), mindestens einem lenkbaren Antriebsrad (19) sowie einer elektronischen Steuerung (12) für die mindestens zwei elektrischen Antriebe (1, 2, 15), wobei sich die elektronische Steuerung (12) aus mindestens einer Signalelektronik (5, 6, 16) und mindestens einer Leistungselektronik (3, 4, 17) zusammensetzt, wobei die elektronische Steuerung (12) für die mindestens zwei elektrischen Antriebe (1, 2, 15) mit nur einer einzigen Schnittstelle (14) für die Ansteuerung durch die übergeordnete Steuerung (11) ausgebildet ist und die Signalelektroniken (5, 6, 16) als eine räumlich und funktional zusammengefasste Einheit (13) ausgebildet sind, **dadurch gekennzeichnet, dass** ein Abstandssensor (18) in radialer Richtung außerhalb des Antriebsrades (19) angebracht ist und damit ein Abstand (20) zum Antriebsrad (19) messbar ist und ein zweiter Sensor (21) am Fahrzeugunterboden (23), in Querrichtung außerhalb der Fahrzeugmitte angebracht ist und mit dem Sensor (21) ein Abstand (22) zum Untergrund (24) sowie eine Fahrzeuggeschwindigkeit über Grund messbar ist.

2. Flurförderfahrzeug nach Anspruch 1, **dadurch gekennzeichnet, dass** die mindestens zwei Antriebe (1, 2, 15) aus mindestens einem elektrischen Fahrantrieb und einem elektrischen Lenkantrieb bestehen.

3. Flurförderfahrzeug nach Anspruch 2, **dadurch gekennzeichnet, dass** die mindestens zwei elektrischen Antriebe (1, 2, 15) eine elektrische Bremseinrichtung, vorzugsweise einem Bremsmagneten, beinhalten.

## Claims

1. Industrial truck with an energy store, a superordinate controller (11), at least two electrical drives (1, 2, 15), at least one steerable driving wheel (19) and an electronic controller (12) for the at least two electrical drives (1, 2, 15), the electronic controller (12) comprising at least one signal electronics unit (5, 6, 16) and at least one power electronics unit (3, 4, 17), the electronic controller (12) for the at least two electrical drives (1, 2, 15) being formed with only a single interface (14) for driving by virtue of the superordinate controller (11), and the signal electronics units (5, 6, 16) being in the form of a spatially and functionally combined unit (13), **characterized in that** a distance sensor (18) is fitted in the radial direction outside of the driving wheel (19) and it is thereby possible to measure a distance (20) to the driving wheel (19), and a second sensor (21) is fitted on the vehicle underside (23), in the transverse direction outside of the vehicle centre, and the sensor (21) can be used to measure a distance (22) to the underground (24) and a vehicle speed above ground.

2. Industrial truck according to Claim 1, **characterized in that** the at least two drives (1, 2, 15) comprise at least one electric traction drive and one electric steering drive.

3. Industrial truck according to Claim 2, **characterized in that** the at least two electric drives (1, 2, 15) contain an electrical brake device, preferably a brake magnet.

## Revendications

1. Chariot de manutention comprenant un accumulateur d'énergie, une commande prioritaire (11), au moins deux entraînements électriques (1, 2, 15), au moins une roue d'entraînement dirigeable (19) ainsi qu'une commande électronique (12) pour les au moins deux entraînements électriques (1, 2, 15), la commande électronique (12) se composant d'au moins une électronique de signaux (5, 6, 16) et d'au moins une électronique de puissance (3, 4, 17), la commande électronique (12) pour les au moins deux entraînements électriques (1, 2, 15) étant réalisée avec seulement une interface unique (14) pour la commande par la commande prioritaire (11), et les électroniques de signaux (5, 6, 16) étant réalisées sous forme d'une unité (13) rassemblée spatialement et fonctionnellement, **caractérisé en ce qu'**un capteur de distance (18) est monté dans la direction radiale en dehors de la roue d'entraînement (19) et permet ainsi de mesurer une distance (20) à la roue d'entraînement (19), et un deuxième capteur (21) est monté sur le châssis du véhicule (23), dans la direction transversale en dehors du centre du véhicule, et une distance (22) au châssis (24) ainsi qu'une vitesse du véhicule au sol peuvent être mesurées avec le capteur (21).

2. Chariot de manutention selon la revendication 1, **caractérisé en ce que** les au moins deux entraînements (1, 2, 15) se composent d'au moins un entraînement de conduite électrique et d'un entraînement de direction électrique.

3. Chariot de manutention selon la revendication 2, **caractérisé en ce que** les au moins deux entraînements électriques (1, 2, 15) contiennent un dispositif de freinage électrique, de préférence un aimant de freinage.
